# EUROPEAN PATENT APPLICATION

(11) **EP 1 296 272 A1**
(43) Date of publication of application: **26.03.2003**
(21) Application number: 02256569.1
(22) Date of filing: 20.09.2002
(51) Int. Cl.: G06F 17/60

(54) **Apparatus and method for binding business protocols to contract actions**

(30) Priority: 21.09.2001 GB 0122865
(71) Applicant: Hewlett-Packard Company, Palo Alto, CA 94304 (US)
(72) Inventor: Salle, Mathias Jean Rene, Palo Alto, CA 94306 (US); Boulmakoul, Abdel, Bristol BS6 5JJ (GB); Morciniec, Michal, Clifton, Bristol BS8 2DW (GB)
(74) Representative: Lawrence, Richard Anthony

(57) **Abstract**

It is often difficult to reliably monitor contract performance and receive timely information as to whether a client is actually going to carry out its contractual obligations. Accordingly the invention proposes a method and apparatus for binding business protocols to abstract actions defined in an e-contract. This allows one to separate the creation of business protocols from their regulation. Consequently, e-contracts are published independently from business processes. The binding is achieved by following a binding protocol where an agreement is reached as to how contract actions will be represented concretely by business processes and, in addition, an advisal protocol is defined which allows participants to declare that a stream of messages of a business protocol corresponds to contract action. This allows a third party to monitor the interaction without having to understand the business protocol agreed between primary participants and perform an auxiliary function such as data storage.

## Description

The present invention relates to an apparatus and method for binding business protocols to contract actions, in particular to an apparatus and methods for binding contract descriptors to business protocols that may be directly executed using a computer system.

Today many business interactions take place within the context of service contracts. These contracts define commitments that the parties make to each other and are expressed as obligations, permissions or prohibitions. Typically, contracts are based on templates that have evolved in a given domain over a considerable period of time. A template has a number of free parameters (like delivery dates or contract price) that can be fixed in contract negotiation

We call such contracts normative contracts because they define a commitment model for parties. Textual normative contracts may be formalised into a data-structure that can be transmitted over a communication network and interpreted by a machine. This data-structure is called an electronic contract (e-contract). Apparatus and methods for this purpose are described further in the assignee's copending European Patent Application of even date entitled "Apparatus and Automated Method of Contract Drafting".

This e-contract defines commitments between parties as obligations to carry out actions such as delivery or payment. Contract actions such as these often can be realized by a standard message exchange called a business protocol.

It is often difficult to reliably monitor contract performance and receive timely information as to whether a client is actually going to carry out the contractual obligations. Furthermore, business participants may not trust each other to perform other (auxiliary) actions, and therefore may agree to a trusted third party being involved in the contract action process. The involvement of the trusted third party in the contract action process can sometimes be burdensome, especially if a dispute should arise between the contracting parties, and the trusted third party is charged with performing auxiliary functions that are related to the action in dispute.

The present invention seeks to address or significantly mitigate one or more of the afore-mentioned problems.

According to a first aspect of the invention there is provided a method of binding a business protocol to contract descriptors, comprising the steps of: agreeing on a binding protocol for an e-contract through a graphical user interface displayed on the screen of a display unit, said graphical user interface comprising an image formatted to show a plurality of selectable binding protocols; downloading the binding protocol and associated business protocol descriptor to a business protocol repository from a business protocol provider; analysing the structure of the e-contract using pre-assigned contract descriptors; identifying commitments arising between Contract Parties from the e-contract; associating the contract descriptors to the identified commitments according to the type of commitment; and executing the business protocol descriptors on the analysed e-contract using a computerised system to create a binding descriptor that links the business protocol to the contract descriptors.

According to a second aspect of the invention there is provided a method of binding a business protocol to contract descriptors, comprising the steps of: agreeing on a binding protocol for an e-contract through a graphical user interface displayed on the screen of a display unit, said graphical user interface comprising an image formatted to show a plurality of selectable binding protocols; downloading the binding protocol and associated business protocol descriptor to a business protocol repository from a business protocol provider; analysing the structure of the e-contract using pre-assigned contract descriptors; identifying commitments arising between Contract Parties from the e-contract; associating the contract descriptors to the identified commitments according to the type of commitment; using a conversion tool made available by the business protocol provider to generate an alternative descriptor, if the business protocol descriptor cannot be directly executed by a computerised system; and executing the alternative descriptor to link business protocol data to the business protocol descriptor to create a binding descriptor that links the business protocol to the contract descriptors.

According to a third aspect of the invention there is provided a method of retrieving a contract clause for a given executable contract descriptor, comprising the step: assigning a contract reference for a given executable contract descriptor to a TextualContract record which contains the contract clause; the contract reference being stored in a field held in a FormalContract record.

According to a fourth aspect of the invention there is provided a method of advising a Mediator of contract fulfilment that is independent of the means of fulfilment, comprising the steps of: sending all messages between Contract Parties in accordance with an agreed business protocol to a mediator messaging system; monitoring the messages using a monitoring application in accordance with an advisal protocol to determine which parts of the data-stream making up the message represent a contract action; and analysing the parts of the data-stream representing the contract action to determine contract fulfilment.

According to a fifth aspect of the invention there is provided an apparatus for binding a business protocol to contract descriptors of a contract between Contract Parties, comprising: a communication network for carrying messages between distributed entities; a business protocol repository for storing a description of a binding protocol, business protocol descriptors, a description of an advisal protocol and a description of a contract fulfilment protocol; a process engine for controlling the timing and sequence of messages on the basis of the description of the business protocol; a messaging module updated to interact with the process engine and for sending messages to and receiving messages from the Contract Parties according to the binding protocol; a state repository for storing the persistency for a state machine and data received as part of the messages according to the binding protocol; a display unit for displaying a graphical user interface comprising an image formatted to show a plurality of selectable binding protocols; a binding application for binding the contract to the binding protocol and for accessing one or more of the business protocol descriptors from the business protocol repository to bind to a contract action; a bindings repository for storing binding descriptors which are accessed once one of the Contract Parties has agreed to fulfil its commitment; and a computer processor for executing the binding descriptor such that messages are exchanged between parties according to the business protocol. The computer processor, may comprise a data store, the process engine and the messaging module.

According to a sixth aspect of the invention there is provided a data structure for housing a binding descriptor in accordance with the method of the first aspect, comprising: a business protocol name field for containing the name of the protocol, name of the provider and locator of the repository; a performing role field for containing the name of the role in the protocol that is the principal performer; a contract identity field for holding contract identity data; a statement identity field for containing data for identifying each statement within the context of the contract; an action name field for containing data for specifying the name of the contract action; and a performing role field for containing data for listing the contract role responsible for action performance.

According to a seventh aspect of the invention there is provided a data structure for housing an alternative descriptor in accordance with claim 2, comprising: a business protocol name field for containing the name of the protocol, name of the provider and locator of the repository; a performing role field for containing the name of the role in the protocol that is the principal performer; and a business protocol implementation field for containing the descriptor of the implementation.

According to a eighth aspect of the invention there is provided a computer readable storage medium storing instructions that, when executed by a computer, cause the computer to perform a method according to the first, second, third or fourth aspect.

Other aspects and features of the present invention will become apparent to those ordinarily skilled in the art upon review of the following description of the specific embodiments of the invention in conjunction with the accompanying figure.

Embodiments of the invention will now be described by way of example only, with reference to the drawing in which:
Figure 1 is a schematic block diagram of an apparatus for retrieving and binding e-contracts for an embodiment in accordance with the present invention;
Figure 2 is a block diagram of the data structures for e-contract descriptors in accordance with an embodiment of the present invention;
Figure 3 is a block diagram of the data structure for business protocol descriptors in accordance with an embodiment of the present invention;
Figure 4 is a block diagram of the data structures for binding descriptors in accordance with an embodiment of the present invention;
Figure 5 is a schematic diagram of a state machine description prior to the setting of a context, in accordance with an embodiment of the invention; and
Figure 6 is a schematic diagram of the state machine description of figure 5 after a context has been established.

This invention proposes a method and apparatus for binding concrete business protocols to abstract actions defined in e-contract. This allows one to separate the creation of business protocols from their regulation. Consequently, e-contracts are published independently from business processes.

The binding is achieved by following a binding protocol where an agreement is reached as to how contract actions will be represented concretely by business processes and, in addition, an advisal protocol is defined which allows participants to declare that a stream of messages of a business protocol corresponds to contract action. This allows a third party to monitor the interaction without having to understand the business protocol agreed between primary participants and perform an auxiliary function such as data storage.

Once bound to business protocols, the e-contract is operational in the sense that the contract actions and parameters have their equivalent descriptions that can be processed by a computerised system. In a preferred embodiment the description used is a business process description that can be loaded into a Process Engine and executed. The Process Engine interacts with a Messaging System requesting that messages are formed and sent to the indicated destination. The Process Engine controls the sequence and timing of such requests on the basis of the business process description submitted for execution.

During the contract execution parties evaluate the commitment model and give notification of their to intention to carry out or not to carry out the commitment. Further description of an appropriate approach for this is found in the assignee's copending European Patent Application of even date entitled "Apparatus and Method of Communicating Changes in States of Contractual Responsibilities". For the commitments that the parties to the contract intend to fulfil, the parties execute bound business protocols. If a third party is involved the parties may use an advisal protocol.

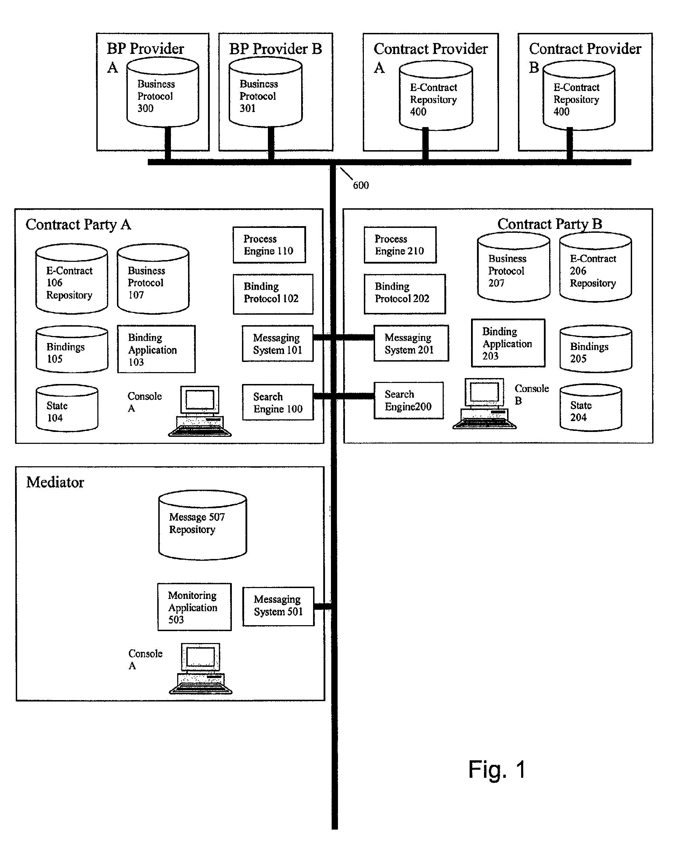

For the purposes of this specification the roles of Contract Provider, Business Protocol Provider, Contract Parties, an Mediator are defined as follows: *Contract Provider* provides an electronic contract to be bound, *Business Protocol Provider* provides a description of a business protocol, *Contract Parties* are those that want to interact according to the contract, and *Mediator* is one who monitors the interactions and performs auxiliary functions as illustrated in Figure 1.

With reference to Figure 1, a Contract Provider publishes E-Contracts in a public repository 400. The repository includes a categorisation scheme and user interface that allows users to search for e-contracts. The repository is connected to a communications network 600 (such as an Internet) that allows users to access it remotely. There may be many contract providers maintaining a number of repositories.

A Business Protocol Provider publishes a description of business protocols in a repository 300. The repository includes a categorisation scheme and user interface, typically a graphical user interface, that allows users to search for and select business protocols. The repository is connected to the communications network 600 that allows users to access it remotely. There may be many business protocol providers maintaining a number of repositories.

Contract Parties use a Search Engine 100 to search for the Contract Providers. Once a Contract Provider is found they can search the E-Contract Repository and download any E-Contract into their repository 106.

An E-Contract Provider (not illustrated) may include information about Business Protocol Providers that offer protocols suitable for an E-Contract type contract being downloaded. Alternatively each Contract Party may use the Search Engine 100 to search for Business Protocol Providers. The Contract Party can search the Business Protocol Repository 300, 301 and download the protocol description into the Business Protocol Repository 107.

Contract Parties can locate each other by using the Search Engine 100 by using Internet Services such as a Trading Exchange. Contract Parties A and B use Messaging Systems 101, 201 to communicate with each other according to the business protocol descriptions stored in Business Process Repository 107, 207. Communication is achieved by loading the descriptions into the Process Engine 110, 210. The descriptions when executed control the timing and sequence of requests being made to the Messaging System 101/201.

The interactions between Contract Parties A and B can be mediated and monitored by the Mediator. If mediation is required for given contract commitment, the messages are firstly routed from the Contract Parties to the Mediator who receives them through the Messaging System 501. The Mediator uses a monitoring application 503 to determine a potential auxiliary function that should be performed for a message. For example the Mediator may store and timestamp selected messages in the message repository 507. After performing the auxiliary function the Mediator forwards the received message to the destination Contract Party that receives it through its messaging system 201.

It is assumed that each of the Contract Parties has in their Business Process Repository, a description of the binding protocol, advisal protocol, and contract fulfilment protocol as disclosed in co-pending UK Patent Application entitled "An Apparatus and Method of Communicating Changes in the States of Contractual Responsibilities. These protocols form a part of the E-Contract description that parties have downloaded form the Contract Provider. It is also assumed that Contact Parties will have agreed on the E-Contract that they want to regulate their business interactions.

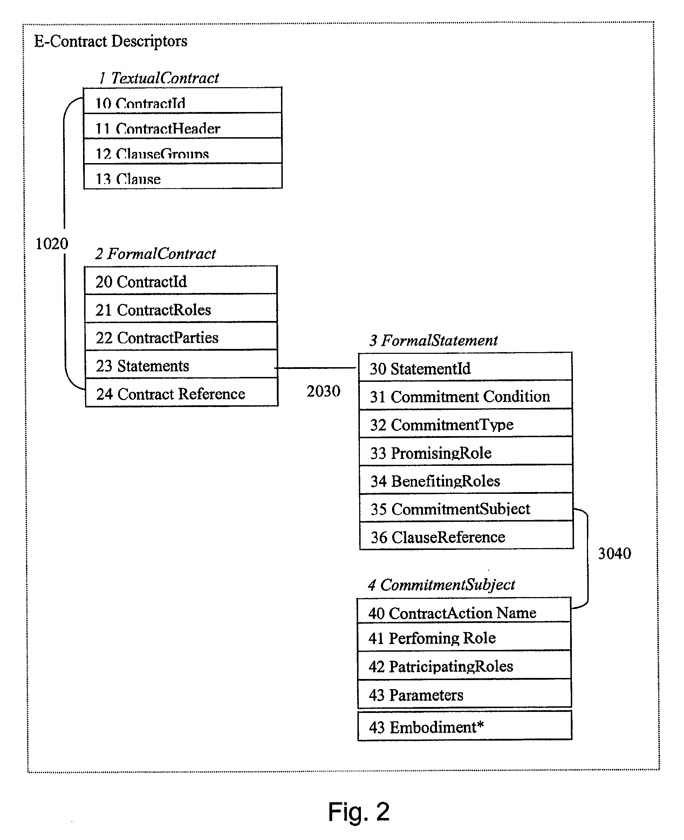

Before describing the binding and advisal protocols used with the preferred embodiment, pertinent details of the structure of an e-contract will be described, and which are illustrated in figure 2.

The e-contract is published by the *Contract Publisher* who determines the structure of the descriptors that are illustrated in figure 2. Alternatively, a Standards body could provide the descriptors for the e-contract.

The e-contract contains the text of the original contract structured into ClauseGroups and Clauses stored in *TextualContract* record. There is a corresponding *FormalContract* record that is associated to the *TextualContract* record through the reference 1020. This reference is stored in field 24 of the *TextualContract* record allowing for retrieval of a human readable *TextualContract* record that corresponds to a machine-readable *FormalContract* record.

*The FormalContract* record has a field 21 that lists contract roles (such as Buyer, Seller), and indicates in a field 22 contract parties (such as Hewlett-Packard and Wall Mart) that will be fulfilling the contract roles. Furthermore, a field 23 lists pointers 2030 to *FormalStatement* records. Field 23 may be linked with field 12 to associate a group of *FormalStatement* records with a description of a clause group.

The *FormalStatement* record models commitment that will exist between contract roles 21 and therefore contract parties 22. Each statement can be identified within the context of a contract by a field 30. Field 31 gives a condition under which the commitment will arise, for example "CurrentDate equals 30 August 2001".

Field 32 gives the type of the commitment, for example Obligation, Prohibition, Permission, Right. Field 33 specifies the contract role that is promising to undertake the commitment and Field 34 lists all contract roles who benefit from, i.e. have an interest in, the commitment. Field 35 is a pointer, corresponding to the association 3040, to a *CommitmentSubject* record that describes the subject of commitment between roles 33 and 34. The *FormalStatement* record has a clause reference field 36 that contains a pointer to a textual description of the clause held in field 13.

The *CommitmentSubject* record specifies the name of the contract action in field 40. Parameters relevant to the action are listed in field 43. The contract role responsible for action performance is listed in field 41 and contract roles that are required to participate in the action are listed in field 42.

### Business Protocol Descriptors

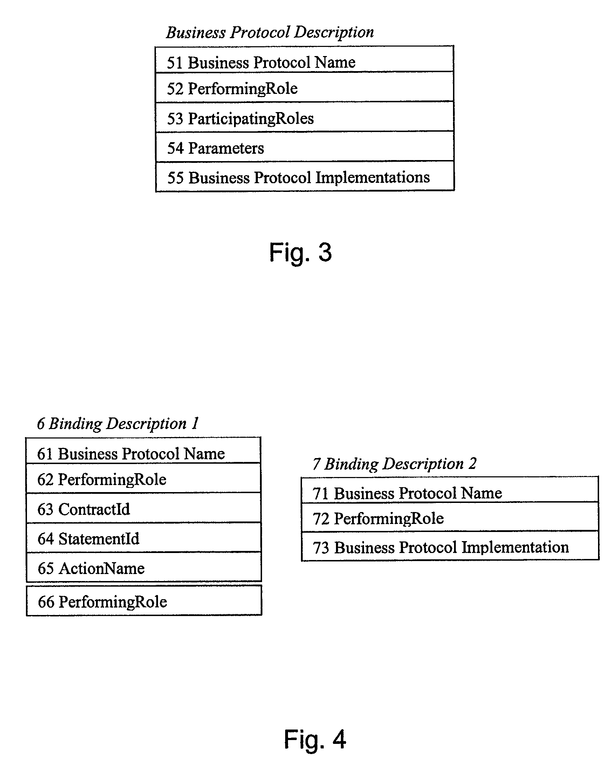

Business Protocol Descriptors are provided by the Business Protocol Providers and can be retrieved from the public repository 300, 301. A Standards body can alternatively provide the descriptors. An example Business Protocol Description record is shown in Figure 3. Field 51 contains the name of the protocol, the name of the provider and the locator of the repository. Field 52 gives the name of the role in the protocol (such as Shipper) that is the principal performer (initiator). Field 53 specifies the role names (such as Consignee) that will be participating in (receiving messages) the protocol. Field 54 lists parameters of the protocol (such as names and schemas of documents to be exchanged). Optional field 55 may contain implementations of the business protocol provided by the Business Protocol Provider A, B such as business process descriptions. The precise data-structure of these implementations depends on the realisation of the Process Engine 110 and Messaging System 101.

For a given textual clause it is possible to retrieve the description of a business protocol and its instances that may be running. This allows the user to view all business processes and their instances being executing on the Process Engine 101 that are linked to the contract text clause by the descriptors shown in figures 2, 3 and 4.

The reverse variant of this process is also valuable: given an instance of the business process being executed on the Process Engine 101, the user can find the contract and the clause within it that is associated through the descriptors shown in figures 2, 3 and 4. The business protocol forms a part of the formal statement descriptor stored in the e-contract repository, and it is on the basis of this descriptor that the textual clause can be retrieved.

In the preferred embodiment, the Process Engine 110 is Hewlett-Packard's Process Manager and the Messaging System is a Sonic MQ JMS System. In order to achieve independence from IT vendors providing different realisations for the Process Engine 11 and the Messaging System 101, the descriptor published by the Business Protocol Provider in figure 3 may not contain the optional field 55. Instead, the Business Protocol Provider would make available a conversion tool (typically supplied by an IT vendor such as Hewlett-Packard) that given the information in the descriptor generates an implementation that can be directly executed by the Process Engine 110 and the Messaging System 101.

The Contract Parties A, B download the business protocol descriptor from the public protocol repository 300, 301, and copy it into their private business repositories 107, 207. The descriptor may be directly executed by a computerised system such as a workflow engine. However, the Business Protocol Provider may make a tool available to the Contract Parties A, B, that, given a business protocol descriptor that is not directly executable by the computerised system, it generates a corresponding executable description. An example of such an executable description would be a business process description that can be processed by the Process Engine 110. Given the Business Protocol Name, Performing Role and the vendor identification the tool generates a binding description as shown in figure 4 as record 7 Binding Description 2. The implementation of the business protocol (such as business process description) is stored in field 73.

### Binding Descriptors

As a result of the binding protocol, Binding Descriptors as shown in Figure 4 are created by each contract Party A, B. The Binding Descriptor 1 is created by copying fields 51 and 52 into fields 61 and 62. Field 20 is copied into field 63, field 30 into field 64 and fields 40 and 41 into fields 65 and 66.

If the business protocol descriptor cannot be directly executed by the computerised system, the Contract Parties A, B may instead use a conversion tool made available by the Business Protocol Provider as mentioned in previous section. The tool can then generate a descriptor as shown in Figure 4. This descriptor links the business protocol data (fields 61 and 62) with the descriptor of the implementation (field 63).

It is anticipated that an agreement between the contract parties A, B on the business protocols to be used for contract action may form a part of the e-contract for legal reasons. If this is the case, then the CommitmentSubject record would have an additional field 44 called Embodiment that would contain the record Binding Descriptor 1.

### Binding Protocol

Once the Contract Parties A, B have agreed on a specific e-contract, they carry out the binding of contract using the binding protocol 102, 202. The description of binding protocol is stored in the business protocol repository 107, 207. The parties exchange messages according to the protocol though the messaging systems 101 and 201.

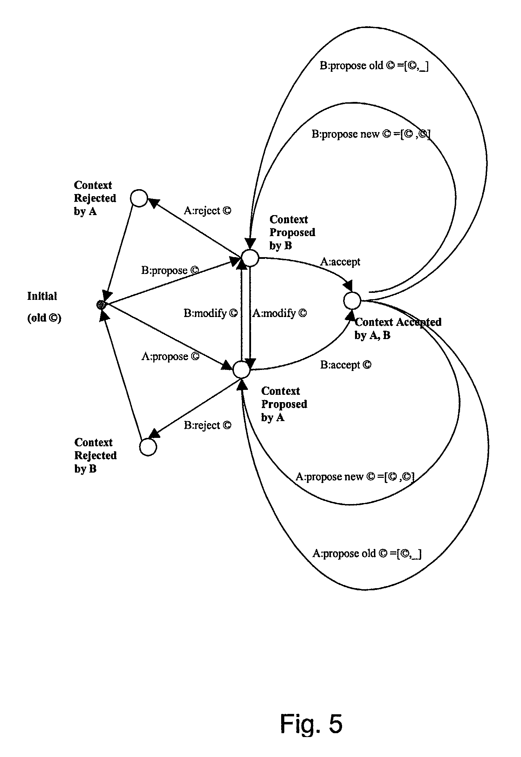

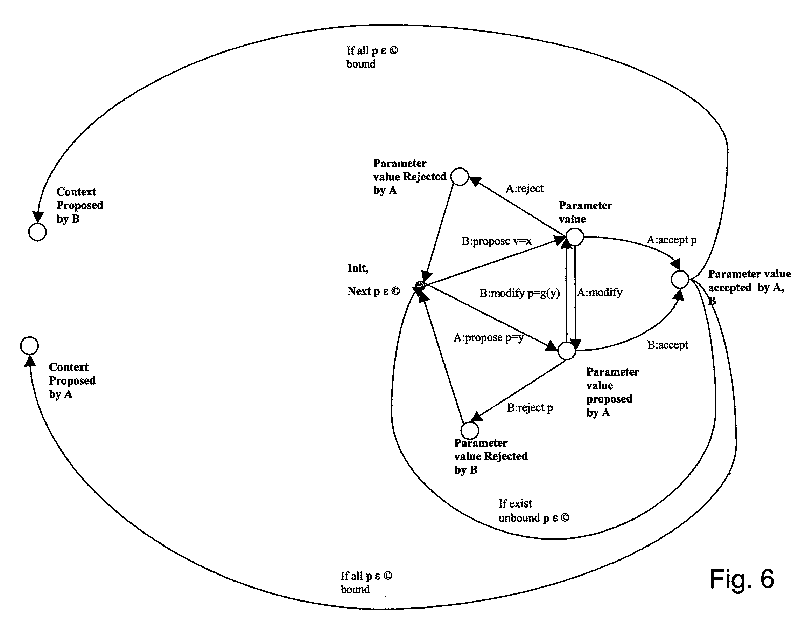

The protocol consists of set of messages: propose, modify, accept, reject and a state machine description shown in Figure 5 and 6. The persistency for the state machine and data received as part of the messages is stored in the State Repository 104, 204.

The main idea behind the protocol is that any binding that occurs does so in a specific context. The context is an unordered set of descriptor and value pairs. Some descriptors in the context may not have value, i.e. be unbound.

Once the context is agreed the values of unbound descriptors are assigned in that context. Once all descriptors in the current context are assigned values (bound), agreement is reached.

### Establishing Context

Firstly, the Contract Parties A, B must establish a context for the binding. The association of a contract action 40 with a business protocol 51 occurs in the context of a given contract and statement. Therefore a contract identifier 20 and 30 must at least be given for the context.

As an example consider following message exchange:
A: propose
@=[Contractld=232, Statementld=7]

B can accept, reject or modify context @. Suppose that B does not want to bind statement number 7 but instead wants to bind statement number 5. B then replies:
B: modify
@=[Contractld=232, Statementld=5, contractActionName=pay, Embodiment =_] Now A can accept, reject or modify context @. Suppose A wants to bind this statement too, it then responds:
A: accept
@=[Contractld=232, Statementld=5, contractActionName=pay, Embodiment =_]

The context for setting the value of the descriptor Embodiment 43 may be done as described below.

### Assigning value to Descriptors

Once the context is established the transition is made to the state machine as shown in figure 6. Through the exchange of messages the values of unbound descriptors in an established context are established.

Each Contract Party A, B uses its associated Business Protocol Repository 107, 207 to access a business protocol descriptor 7. Suppose Contract Party B has a descriptor of a payment business protocol called PIP45 that involves Shipper and Consigned and has a parameter PaymentAdvice; this information would be represented in the following manner:

### {PIP45,Shipper,Consignee,PaymentAdvice}

Contract Party B would propose to Contract Party A that the descriptor Embodiment 40 should be bound to the business protocol descriptor in the following way:
B: propose
@=[Contractld=232, Statementld=5, contractActionName=pay , Embodiment ={PIP45,Shipper,Consignee,PaymentAdvice}]

However, Contract Party A may not want to communicate according to the protocol PIP45 and may then propose an alternative protocol PIP47:
A: modify
@=[Contractld=232, Statementld=5, contractActionName=pay , Embodiment ={PIP47,Shipper,Consignee,PaymentAdvice}]
If Contract Party B finds the protocol PIP47 in the Business Protocol Repository 207 and agrees that it is suitable for contract action pay, it may agree to bind the descriptor Embodiment 40 to this value in the following way:
A: accept
@=[Contractld=232, Statementld=5, contractActionName=pay , Embodiment ={PIP47,Shipper,Consignee,PaymentAdvice}]

Now that all descriptors are bound transition is made back to the context state machine in figure 5 to state "Context Proposed by A" (for party B) and "Context Proposed by B" (for party A). The context now is the following:

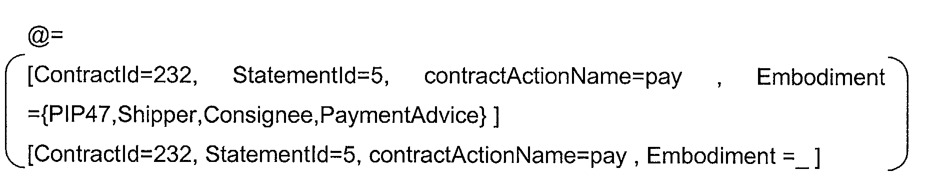

If both parties send acceptance messages, the next state will be "Context agreed by A and B" and because the context is fully bound the protocol will end.

For each protocol message there is a defined timeout. The timeout is interpreted as a Reject response.

The binding protocol is general and any descriptors (such as parameters of actions) can be assigned values as agreed between the parties.

### Binding Descriptor Generation

On completion of the binding protocol each party can generate a BindingDescription1 descriptor (record 6 in figure 3). If this descriptor were not directly executable by the computerised system, each party would run a tool provided by the Business Protocol Provider. The tool would create a BindingDescription2 descriptor (record7 in figure 3).

### Advisal Protocol

Once the e-contract is bound to business protocols it is operational in the sense that the commitments defined in the contract can be realized by means of a message exchange according to an agreed protocol.

The Contract Parties are able to communicate about the change of contractual commitments according to a business protocol. Once each Contract Party A, B has agreed to fulfil the commitment, as identified by descriptors 20 ContractlD and 30 StatementlD of the E-contract model, it retrieves corresponding BindingDescriptor1 (and potentially Binding Descriptor2) the from the Bindings Repository 105. The BindingDescriptor is then loaded into a computerised system and executed. As a result messages are exchanged between parties according to the business protocol.

A third party *Mediator* may be present on the communication network 600, may perform auxiliary functions, such as storage of messages for non-repudiation, for interactions between the Contract Parties A, B.

In order to benefit from the auxiliary functions the Contract Parties A, B firstly send all messages that correspond to the business protocol to the Mediator's messaging system 501. This allows the mediator to monitor the messages using a Monitoring Application 503.

In order to execute auxiliary functions the Mediator does not have to know an agreed business protocol by which a contract action will be realized. All it needs to know is that a particular part of the data-stream sent into a communication network represents the contract action or one of its parameters.

In order to allow the Mediator to determine which parts of the monitored data-stream correspond to a certain contract action or parameter, the Contract Parties A, B follow an advisal protocol. The advisal protocol consists of inserting *begin* and *end* markers into the data-stream marking the beginning and the end of the data-stream:
*begin* (Contractld, Statementld, ContractActionName)
...
*begin* (Contractld, Statementld, ContractActionName, Parameter)
...
*end* (Contractld, Statementld, ContractActionName, Parameter)
...
*end* (Contractld, Statementld, ContractActionName)

The parameters of the advisal messages correspond to descriptors of the e-contract model in the following way:
- Contractld corresponds to field 20 of *FormalContract* record
- Statementld corresponds to field 30 of *FormalStatement* record
- ContractActionName corresponds to field 40 of *CommitmentSubject* record
- Parameter corresponds to parameter in the list stored in field 43 of *CommitmentSubject* record

The Mediator observes the stream of messages and stores parts of the data stream according to its preferred filing scheme, such as by a contract and statement.

The proposed method and arrangement described herein allow the creation of business protocols to be separated from their regulation, and facilitate the ease of e-commerce through an unconstrained use of business protocols for contract fulfilment.

Although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source code, object code, a code intermediate source and object code such as in partially compiled form, or in any other form suitable for use in the implementation of the processes according to the invention. The carrier being any entity or device capable of carrying the program.

For example, the carrier may comprise a storage medium, such as ROM, for example a CD ROM or a semiconductor ROM, or a magnetic recording medium, for example a floppy disc or hard disk. Further, the carrier may be a transmissible carrier such as an electrical or optical signal which may be conveyed via electrical or optical cable or by radio or other means.

When the program is embodied in a signal which may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

Although the invention has been shown and described with respect to a best mode embodiment thereof, it should be understood by those skilled in the art that the foregoing and various other changes, omissions and additions in the form and detail thereof may be made therein without departing from the scope of the invention as claimed.

## Claims

1. A method of binding a business protocol to contract descriptors, comprising the steps of:
agreeing on a binding protocol (102,202) for an e-contract through a graphical user interface displayed on the screen of a display unit, said graphical user interface comprising an image formatted to show a plurality of selectable binding protocols;
downloading the binding protocol (102,202) and associated business protocol descriptor (5) to a business protocol repository (107,207) from a business protocol provider (A,B);
analysing the structure of the e-contract using pre-assigned contract descriptors (10,11,12,13,20,21,22,23,24,30,31,32,33,34,35,36,40,41,42,43);
identifying commitments arising between Contract Parties (A,B) from the e-contract;
associating contract descriptors to the identified commitments according to the type of commitment; and
executing the business protocol descriptors (5) on the analysed e-contract using a computerised system to create a binding descriptor (6) that links the business protocol to the contract descriptors.

2. A method of binding a business protocol to contract descriptors, comprising the steps of:
agreeing on a binding protocol (102,202) for an e-contract through a graphical user interface displayed on the screen of a display unit, said graphical user interface comprising an image formatted to show a plurality of selectable binding protocols;
downloading the binding protocol (102,202) and associated business protocol descriptor (5) to a business protocol repository (107,207) from a business protocol provider (A,B);
analysing the structure of the e-contract using pre-assigned contract descriptors (10,11,12,13,20,21,22,23,24,30,31,32,33,34,35,36,40,41,42,43);
identifying commitments arising between Contract Parties (A,B) from the e-contract;
associating contract descriptors to the identified commitments according to the type of commitment;
using a conversion tool made available by the business protocol provider (A,B) to generate an alternative descriptor, if the business protocol descriptor (5) cannot be directly executed by a computerised system; and
executing the alternative descriptor to link business protocol data to the business protocol descriptor (5) to create a binding descriptor (7) that links the business protocol to the contract descriptors.

3. A method of retrieving a contract clause for a given executable contract descriptor(10,11,12,13,20,21,22,23,24,30,31,32,33,34,35,36,40,41,42,43), comprising the step:
assigning a contract reference for a given executable contract descriptor to a TextualContract record (1) which contains the contract clause;
the contract reference being stored in a field (24) held in a FormalContract record (2).

4. A method of advising a Mediator of contract fulfilment that is independent of the means of fulfilment, comprising the steps of:
sending all messages between Contract Parties (A,B) in accordance with an agreed business protocol to a mediator messaging system (501);
monitoring the messages using a monitoring application (503) in accordance with an advisal protocol to determine which parts of the data-stream making up the message represent a contract action; and
analysing the parts of the data-stream representing the contract action to determine contract fulfilment.

5. A method according to claim 4, further comprising the steps:
determining whether an auxiliary function should be performed for the message using the monitoring application (503); and
performing the auxiliary function if it is determined it should be performed.

6. A method according to claim 4 or 5, wherein the step of performing the auxiliary function comprises:
time-stamping a copy of a selected message; and
storing the time-stamped copy of the message in a message repository (507).

7. A method according to any one of claims 4 to 6, further comprising the step:
forwarding the received messages to the destination Contract Party through a communication network (600) using the mediator messaging system (501).

8. An apparatus for binding a business protocol to contract descriptors (10,11,12,13,20,21,22,23,24,30,31,32,33,34,35,36,40,41,42,43) of a contract between Contract Parties (A,B), comprising:
a communication network (600) for carrying messages between distributed entities;
a business protocol repository (107,207) for storing a description of a binding protocol, business protocol descriptors (5), a description of an advisal protocol and a description of a contract fulfilment protocol;
a process engine (110,210) for controlling the timing and sequence of messages on the basis of the description of the business protocol;
a messaging module (101,201) adapted to interact with the process engine and for sending messages to and receiving messages from the Contract Parties according to the binding protocol (102,202);
a state repository (104,204) for storing the persistency for a state machine and data received as part of the messages according to the binding protocol;
a display unit for displaying a graphical user interface comprising an image formatted to show a plurality of selectable binding protocols;
a binding application (103,203) for binding the contract to the binding protocol and for accessing one or more of the business protocol descriptors (5) from the business protocol repository (107,207) to bind to a contract action;
a bindings repository (105,205) for storing binding descriptors (6,7) which are accessed once one of the Contract Parties has agreed to fulfil its commitment; and
a computer processor for executing the binding descriptor (6,7) such that messages are exchanged between parties (A,B) according to the business protocol.

9. A data structure for housing a binding descriptor (6) in accordance with claim 1, comprising:
a business protocol name field (61) for containing the name of the protocol, name of the provider and locator of the repository;
a performing role field (62) for containing the name of the role in the protocol that is the principal performer;
a contract identity field (63) for holding contract identity data;
a statement identity field (64) for containing data for identifying each statement within the context of the contract;
an action name field (65) for containing data for specifying the name of the contract action; and
a performing role field (66) for containing data for listing the contract role responsible for action performance.

10. A data structure for housing an alternative descriptor (7) in accordance with claim 2, comprising:
a business protocol name field (71) for containing the name of the protocol, name of the provider and locator of the repository;
a performing role field (72) for containing the name of the role in the protocol that is the principal performer; and
a business protocol implementation field (73) for containing the descriptor of the implementation.

11. A computer readable storage medium storing instructions that, when executed by a computer, cause the computer to perform a method of binding a business protocol to contract descriptors according to claim 1 or 2.

12. A computer readable storage medium storing instructions that, when executed by a computer, cause the computer to perform a method of retrieving a contract clause for a given executable contract descriptor according to claim 3.

13. A computer readable storage medium storing instructions that, when executed by a computer, cause the computer to perform a method of advising a Mediator of contract fulfilment that is independent of the means of fulfilment according to any one of claims 4 to 7.

14. A method of retrieving the description of a business protocol and its instance that may be running for a given textual clause, comprising the steps:
retrieving the business protocol descriptor (5) for the textual clause from a business protocol repository (107,207) and a bindings repository (105,205);
querying a process engine (110,210) executing the instance for the business protocol by submitting the business protocol descriptor; and
retrieving all business process instances running on the process engine as a response to the step of querying the process engine.

15. A computer readable storage medium storing instructions that, when executed by a computer, cause the computer to perform a method of retrieving the description of a business protocol and its instance that may be running for a given textual clause according to claim 14.
